Europäisches Patentamt

European Patent Office

Office européen des brevets

(19)

(11) Publication number: **0 146 518**
**A2**

# (12) EUROPEAN PATENT APPLICATION

(21) Application number: **84850396.7**

(22) Date of filing: **18.12.84**

(51) Int. Cl.⁴: **A 01 K 61/00**

(30) Priority: **19.12.83 SE 8307005**

(43) Date of publication of application: **26.06.85 Bulletin 85/26**

(84) Designated Contracting States: **DE FR GB IT NL**

(71) Applicant: **VIKING FISH AB, S-612 00 Finspang (SE)**

(72) Inventor: **Björklund, Tor Leif, Ingelstagatan 73, S-602 23 Norrköping (SE)**

(74) Representative: **Berglund, Gustav Arthur et al, AWAPATENT AB Box 5117, S-200 71 Malmö (SE)**

(54) **Fish breeding plant comprising at least one tank submergible to the desired depth and having an air chamber.**

(57) A plant for breeding salmon or salmon-like fish in open sea environment comprises at least one closed tank (1) submergible to the desired depth and provided with feeding and submersion control equipment (2). Mounted within the tank (1) is an air chamber (5) together with means (2, 6) for supplying air thereto in order to form an artificial water surface for the fish enclosed within the tank. A lighting means (7) is mounted above the air chamber (5) to illuminate said artificial water surface.

EP 0 146 518 A2

ACTORUM AG

## FISH BREEDING PLANT COMPRISING AT LEAST ONE TANK SUB-MERGIBLE TO THE DESIRED DEPTH AND HAVING AN AIR CHAMBER

The present invention relates to a plant for breeding salmon or salmon-like fish in open sea environment.

Salmon bred in tanks in inshore waters has an inadequate growth, presumably because the water temperature in summer and autumn is high. In order to obtain the desired slaughter weight, the salmon must therefore be bred for more than two years, and this means that breeding will be unprofitable. There also is a risk that the salmon reaches sexual maturity too early when exposed to fresh water, and therefore some fish must be slaughtered before it has reached the desired slaughter weight so that the breeder sustains a considerable loss.

It is the object of this invention to provide a plant of the above-mentioned type which is suitable for breeding salmon and salmon-like fish in its natural environment beyond coastal waters, i.e. in open sea environment. Deep-water areas near the coastline and in certain lakes may also be ranked in this category.

To this end, the plant comprises at least one closed tank submergible to the desired depth and provided with feeding and submersion control equipment. The features characterising the plant according to the invention will appear from the appended claim 1, and preferred embodiments of the plant will appear from the appended claims 2-10.

The plant according to the invention thus makes it possible to breed salmon or salmon-like fish at a suitable variable depth corresponding to the maximum feeding capacity of the salmon. The air chamber supplies the salmon with air for its swim bladder, whereby salmon breeding in completely submerged position is greatly facilitated. Furthermore, practical handling of the breeding tanks is achieved in that the tank depth can be controlled from the shore by means of ropes via sheaves anchored on the bottom. Of great importance, finally, is the provision of lighting means for ultraviolet radiation of, primarily, the artificial water surface and, secondly, the entire tank, whereby the daylight period can be varied and even double daylight periods during one day can be introduced.

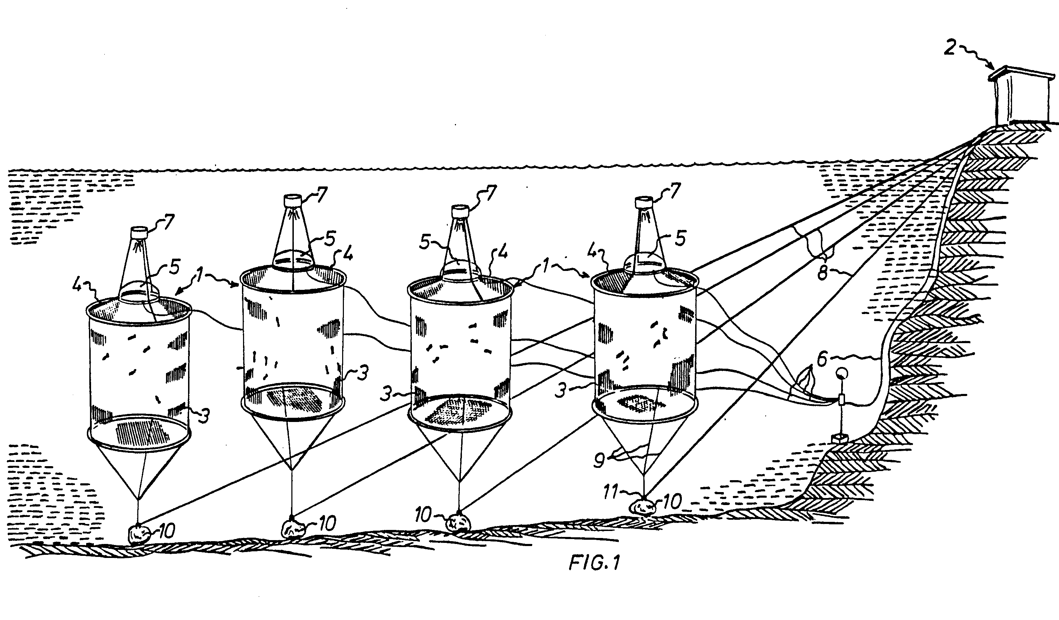

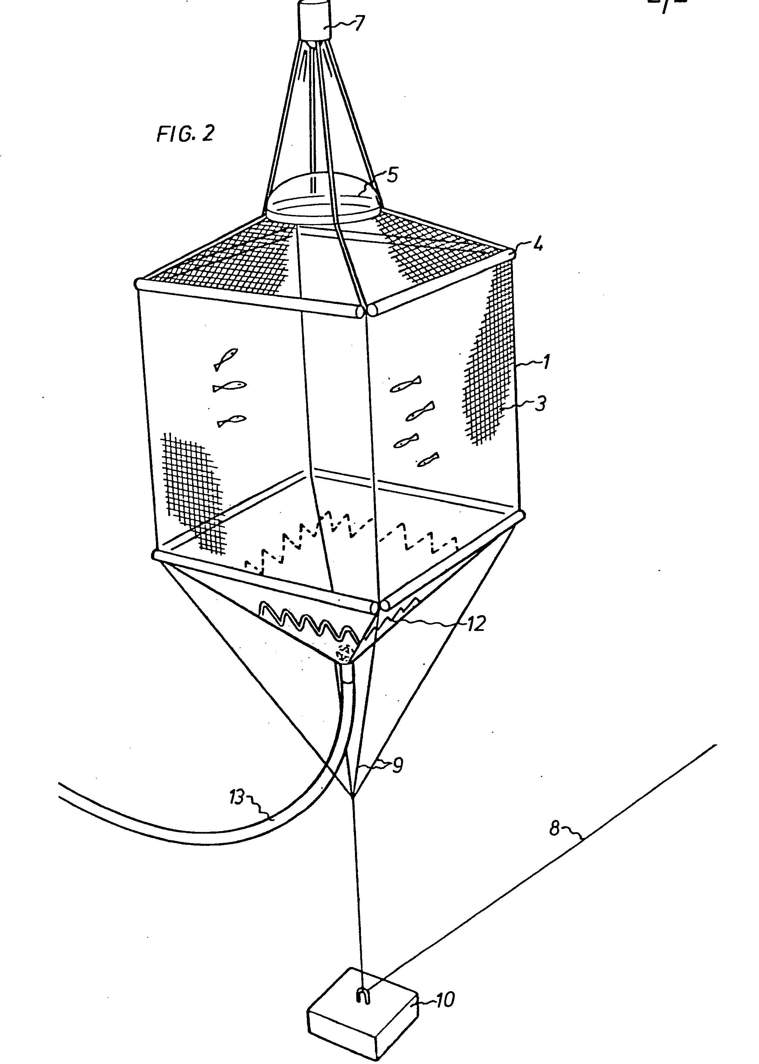

The invention will be described in more detail below, reference being had to the accompanying drawings. Fig. 1 illustrates a plant according to the invention, comprising four tanks. Fig. 2 illustrates an alternative embodiment of a tank.

The plant for breeding salmon or salmon-like fish, as shown in Fig. 1, comprises four tanks 1 and a house 2 in which a land-based control centre with, inter alia, an air pump, a feeding equipment with food store, an electric plant, and an equipment for controlling the submerged position of the tanks 1 are installed.

More particularly, each tank 1 comprises a net part 3 which is in the form of a cylinder of a circular cross-section and is defined by a nylon net having a mesh size sufficiently small to enclose salmon smolt weighing 50 g. Furthermore, each tank 1 comprises a lifting part which may be in the form of an air or foam filled tube 4 of, for example, plastic and having a diameter of, for example, 10 cm.

The tank 1 is provided in its roof part with a dome-shaped air chamber 5 made of some translucent, preferably transparent material, such as plexiglass, and containing air which is supplied from the house 2 via conduits 6 so that an artificial water surface is formed which is illuminated by lighting means 7 mounted above the dome 5. The lighting means 7 illuminates primarily the water surface within the dome 5, such that this water surface is highlighted and perceived by the fish within the tank 1 as an ordinary water surface. Preferably, the lighting means 7 comprises an ultraviolet lamp which, within the tank, gives a light comparable to daylight. Furthermore, the daylight period as perceived by the fish within the tank 1 can be changed by said lighting means 7, and an additional light period may be introduced or simulated for one day so that an increased food consumption and thus an increased weight of the fish is obtained. Suitable means for controlling the lighting means 7 in this manner preferably are mounted in the house 2.

The tank 1 is connected to the house 2 by means of a rope 8 which, via anchoring lines 9, is fixed to the bottom of the tank 1, and the house 2 also is provided with equipment for operating the rope 8 by reeling in or unreeling said rope, the submerged depth of the tank 1 increasing and decreasing, respectively, because the lifting part 4 at the upper peripheral edge of the tank 1 is in the form of an air-filled plastic tube. The rope 8 travels over a point of deflection provided on the bottom and being in the form of a rope sheave 11.

Alternatively, the tank as shown in Fig. 1 can be formed in the manner illustrated in Fig. 2. In contrast to the tank shown in Fig. 1, the tank according to Fig. 2 is of square cross-sectional shape and equipped with a pyramidal bottom part 12 from which a hose 13 extends for sucking up food residues and/or faeces.

0146518

## CLAIMS

1. A plant for breeding salmon or salmon-like fish in open sea environment, comprising at least one closed tank (1) submergible to the desired depth and feeding and submersion control equipment (2), c h a r a c t e r i s e d by an air chamber (5) mounted within the tank (1), and means (2, 6) for supplying air thereto in order to form an artificial water surface for the fish enclosed within the tank.

2. A plant as claimed in claim 1, c h a r a c - t e r i s e d in that said air chamber (5) is mounted in the roof of the tank (1).

3. A plant as claimed in claim 1 or 2, c h a - r a c t e r i s e d in that said air chamber (5) is translucent and preferably made of plexiglass.

4. A plant as claimed in claim 3, c h a r a c - t e r i s e d in that a lighting means (7) is mounted above said air chamber (5) to illuminate the artificial water surface.

5. A plant as claimed in claim 4, c h a r a c - t e r i s e d by means for controlled switching on and off of said lighting means (7).

6. A plant as claimed in claim 4 or 5, c h a - r a c t e r i s e d in that said lighting means (7) is adapted to transmit ultraviolet light.

7. A plant as claimed in any one of claims 1-6, c h a r a c t e r i s e d by a lifting part (4) mounted at the upper part on the tank (1), and a rope (8) fixed to the tank bottom and travelling via a point of deflection (11) anchored on the bottom to a land based anchoring unit (2).

8. A plant as claimed in claim 7, c h a r a c - t e r i s e d by a land based control centre (2) containing an air pump, feeding equipment, food, an electric plant and equipment for controlling the rope connected to the tank bottom.

9. A plant as claimed in claim 7 or 8, c h a - r a c t e r i s e d in that the point of rope deflection fixed to the bottom is a rope sheave (11) secured to a bottom stone.

10. A plant as claimed in any one of claims 1-9, c h a r a c t e r i s e d in that the bottom (12) of the tank (1) is of pyramidal shape and connected to a hose (13) for sucking up food residues and/or faeces.

FIG.1

0146518

1/2

FIG. 2